# EUROPEAN PATENT SPECIFICATION

(11) **EP 3 574 728 B1**
(45) Date of publication and mention of the grant of the patent: **02.07.2025**
(21) Application number: 18174888.0
(22) Date of filing: 29.05.2018
(51) Int. Cl.: A01B 73/04

(54) **SOIL TILLAGE IMPLEMENT AND METHOD FOR FOLDING SECTIONS OF SOIL TILLAGE IMPLEMENT**
BODENBEARBEITUNGSMASCHINE UND VERFAHREN ZUM FALTEN VON ABSCHNITTEN EINER BODENBEARBEITUNGSMASCHINE
INSTRUMENT DE TRAVAIL DU SOL ET PROCÉDÉ PERMETTANT DE PLIER DES SECTIONS D'UN INSTRUMENT DE TRAVAIL DU SOL

(43) Date of publication of application: 04.12.2019
(73) Proprietor: Kverneland Group Les Landes Genusson S.A.S., 85130 Les Landes Genusson (FR)
(72) Inventor: Pasquier, Gaëtan, 85110 Saint Cécile (FR); Sechet, Arnaud, 49450 Villedieu La Blouère (FR)
(74) Representative: Bittner, Thomas L.

(56) References cited:
- EP-A1- 0 847 683
- EP-A1- 2 825 014
- US-A1- 2002 043 378
- US-A1- 2015 129 264

## Description

The present invention refers to a soil tillage implement and a method for folding sections of a soil tillage implement.

### Background

Soil tillage implements are used for soil and residues conditioning. The tillage implement is provided with a plurality of soil working tools such as tines or disc for working in the soil and / or its surface.

Document DE 197 16 801 A1 discloses a tool carrier for a soil tillage implement. The tool carrier is provided with a main frame to which sections comprising soil working tools are connected. The sections are located along a line transversely orientated to the driving direction. By folding the sections provided with the soil working tools are brought in an upright position for transport.

Similarly, document EP 1 008 286 A1 refers to a soil working tool carrier provided with a main frame to which a plurality of sections comprising soil working tools is connected. For establishing a transport arrangement the sections carrying the soil working tools are brought into an upright position, wherein soil working tools of sections provided on opposite sides of the main frame are facing each other.

Document US 2002 / 0043378 A1 relates to a frame support for an implement frame. The frame support is to be used in conjunction with the suspension system of an implement adapted for travel over the ground such as an agricultural packer. The frame support is a rigid protrusion fixed to the packer frame above the packer coil. The frame support is adapted to contact the packer coil during the wing up and wing down operations of the implement. When the frame support and the packer coil contact, the high forces incurred during the wing up and wing down operations are transmitted through the frame support and packer coil down to the ground. The packer coils are mounted to the forward lateral member of each frame section, alternating between being mounted behind the lateral member and being mounted in front of the lateral member.

Document EP 2 825 014 A1 refers to a folding agricultural implement with large operating width such as a soil cultivation implement having a centre frame, wing sections which are pivotably mounted on opposite sides of the centre frame and movable between a folded out field working position, in which they extend outwards, and a folded in transport position in the region of the centre frame. Both wing sections with the respective inner ends thereof are hinged to the centre frame by means of articulations, the axes of articulation of which run in the direction of travel, wherein the wing sections consist of a plurality of sections which are movably connected to one another. Each wing section consists of three sections, wherein the axes of articulation run between the centre frame and the first section and the axes of articulation run between the first and the second section in the direction of travel. The respective axis of articulation runs between the second and the third section in the field working position of the sections at least almost vertically.

Document EP 0 847 683 A1 discloses a soil tillage implement comprising a main frame and, on each of opposite sides of the main frame a first working section, a first articulation, a second working section, a free section, and a second articulation.

Document US 2015 / 129264 A1 discloses an agricultural tillage implement which includes a main section including a hitch extending in a travel direction, a plurality of foldable wing sections coupled with the main section, at least one auxiliary implement assembly coupled to each of the wing sections and a control system. Each auxiliary implement assembly includes at least one support member, at least one pivotal arm pivotally coupled to the support member, at least one actuator coupled to both the support member and the pivotal arm and a ground contacting implement coupled to the pivotal arm. The control system is configured to actuate the actuators to control a position of each ground contacting implement in each of the sections when the agricultural implement is transitioning to a transport mode.

### Summary

It is an object to provide a soil tillage implement and a method for folding sections of a soil tillage implement which allow for an optimized arrangement of sections provided with soil working tools in a transport position.

For solving the object a soil tillage implement according to the independent claim 1 is provided. Further, a method for folding sections of a soil tillage implement according to the independent claim 11 is provided. Embodiments are referred to in the dependent claims.

The technology provided allows for folding and unfolding the plurality of sections for providing the tillage implement in an operation position and a transport position, respectively. In the transport position the first working sections from the opposite sides of the main frame are facing each other in an essentially upright position. In a different location along the longitudinal direction of the main frame the second working sections from the opposite sides of the main frame are also facing each other in an essentially upright position. At least in such transport position the first working sections on one side and the second working sections on the other side are essentially not overlapping when looking from the side at the soil tillage implement. Thus, the different working sections can be placed in a transport location efficiently for establishing a width of the tillage implement transversely to the longitudinal direction of the main frame for transportation.

The first working section on each of the opposite sides of the main frame is provided proximal to the main frame. The second working section on each of the opposite sides of the main frame is located distal to the main frame having the free section provided between the main frame and the second working section on both sides of the main frame. The free section may be an open space free of frame elements or other construction elements. It may extend as a 2-dimensional plane. If such free section is relocated, the open space or plane may be considered virtually relocated, e.g. pivoted around an axis. For transport both the first working sections and the second working sections can be relocated into a similar upright position close to the main frame. Such relocating, for example, may be conducted by pivoting. In addition, the relocating may comprise some movement along a line of movement.

The main frame itself may be provided with additional soil working tools or maybe without soil working tools. In case of having additional soil working tools provided on the main frame a middle section of the working width of the soil tillage implement is provided by the main frame part carrying the additional soil working tools.

The articulation is provided by a flexible joint allowing relative movement (relocation) between the members connected or linked through the flexible joint (articulation). One or more of the different articulations may be provided with an axis of articulation.

If both the first and the second working sections are in the working position, the first working section and the second working section are in a completely non-overlapping offset position along the transversal direction and the longitudinal direction. The free section, in the transversal direction, may be having a section width essentially the same like the section width of the first working section. A section area covered by the free section and oriented essentially horizontally is essentially the same like the section area covered by the second working section. In different embodiments, a section area covered by the first working section and also oriented essentially horizontally may be the same like a section area covered by the free section. Still, in different embodiments the section area covered by the first working section may be essentially the same like the section area covered by the second working section. In different embodiments, in the longitudinal direction of the main frame, the free section may be continuous of the first working section.

A third articulation is provided, the third articulation extending essentially parallel to the longitudinal direction and provided proximal with respect to the main frame, and the second working section together with the free section by the third articulation between the non-working position and a transport position in which both the second working section and the free section are provided in an essentially upright position.

The free section is provided with a free section subframe which is free of soil working tools and relocatable around at least the third articulation. For example, there may be one or more beams providing for the free section subframe. Alternatively, the free section may be provided without a subframe. In such example, in the folding procedure of the sections, there is no free section subframe relocated. Rather, a virtual area, such as a 2-dimensional plane, covered by the free section is pivoted together with the second working section provided above the free section before in the folding process.

The free section subframe is connected or linked to the main frame through the first subframe, thereby, the free section being forced to relocate around at least the first articulation together with the first working section if the first working section is relocating around the first articulation. In such example, the free section subframe may be free of direct connection to the main frame. Alternatively, the free section subframe may be connected to the main frame directly.

The second articulation may be provided, with respect to the main frame, on a distal side of the free section subframe. For example, the second articulation may be provided by or on a subframe member of the free section subframe which is provided as an extension of the first subframe.

The second articulation may be provided, with respect to the main frame, on a distal side of the first subframe. Thereby, the free section is forced to relocate around at least the first articulation together with the first working section if the first working section is relocating around the first articulation. An extension connected to the second articulation provided on the first subframe may be holding the second working section which is to be relocated, e.g. by rotation, around the second axis of articulation. In different examples, the second articulation or an extension of the second articulation may be extending along the side of the second working section proximal with respect to the main frame.

The second subframe may be connected to the main frame through the first subframe, thereby, the second working section being forced to relocate around at least the first articulation together with the first working section if the first working section is relocating around the first articulation. The second subframe of the second working section may be held or carried by the first subframe of the first working section. The second subframe and the second working section may be free of any direct connection to the main frame. The second subframe may be directly connected to the first subframe, but not through the free section subframe. The second subframe of the second working section may be received on the first subframe.

In this case, the free section may be free of an actual joint to the main frame (no actual articulation between the main frame and the free section, but relative movement allowed). Alternatively, the second subframe may be connected to the main frame directly or through the free section subframe.

The second subframe may be connected to the first subframe through the free section subframe.

On each of the opposite sides, the first working section and the second working section may be provided in a front part of the main frame and a rear part of the main frame, respectively. Alternatively, the second working section may be provided in the front part of the main frame, and the first working section may be provided in the rear part of the main frame.

For the soil tillage implement at least one of the following may be provided: the first soil working tools form the first working sections on the opposite sides of the main frame are in a non-crossing position if the first working sections from the opposite sides are located in the transport position; and the second soil working tools form the second working sections on the opposite sides of the main frame are in a non-crossing position if the second working sections from the opposite sides are located in the transport position. At least one of the first and second soil working tools may be oriented to (facing) or away from the main frame in the respective transport position taken by the working sections when folded (transport position). In the unfolded position the soil working tools of the different sections will be oriented to or facing the soil.

In the transport position, the first working section, the second working section, and the free section each may be located in an elevated position essentially above the main frame, i.e. in a position elevated with respect to the main frame when looking from the side at the soil tillage implement. In the transport position, the first working section, the second working section, and the free section each may be located beside the main frame, optionally still in an elevated position in relation to the main frame.

An axis of articulation of the first articulation may coincidence with an axis of articulation of the third axis of articulation. The first and third axis of articulation may be provided as a common pivot axis. For this or other embodiments, the first and third articulation may be provided by a single or common articulation.

At least one of the first and second soil working tools may be selected from the following group of tillage tools: tines, discs, coulters, rotors, and blades. Within at least one of the first and second soil working section the soil working tools may be the same. Alternatively, different types of soil working tools may be provided in at least one of the working sections. Similarly, all working tools provided for the soil tillage implement may be of the same type. Alternatively, different types of soil working tools may be provided on the soil tillage implement.

At least one of the first, second and third articulation may be provided with a pivot axis. Relocating of one or more of the section may be conducted by pivoting only. For one or more of the articulations, the axis of articulation may be provided as a pivot axis.

With respect to the method for folding sections of the soil tillage implement, the different examples referred to above with regard to the soil tillage implement may be applied *mutatis mutandis.*

### Description of embodiments

Following, further embodiments are described. Reference is made to figures. In the figures show:
- Fig. 1: a schematic perspective representation of a soil tillage implement with an unfolded configuration;
- Fig. 2: a schematic perspective representation of the soil tillage implement from Fig. 1 with a partly folded configuration;
- Fig. 3: a schematic perspective representation of the soil tillage implement from Fig. 1 with a further folded configuration;
- Fig. 4: a schematic perspective representation of the soil tillage implement from Fig. 1 with a still further folded configuration;
- Fig. 5: a schematic perspective representation of the soil tillage implement with a completely folded configuration;
- Fig. 6: a schematic representation of the soil tillage implement with the completely folded configuration in a top view; and
- Fig. 7: a schematic representation of an arrangement of elements of the soil tillage implement with the unfolded and the completely folded configuration in a front view.

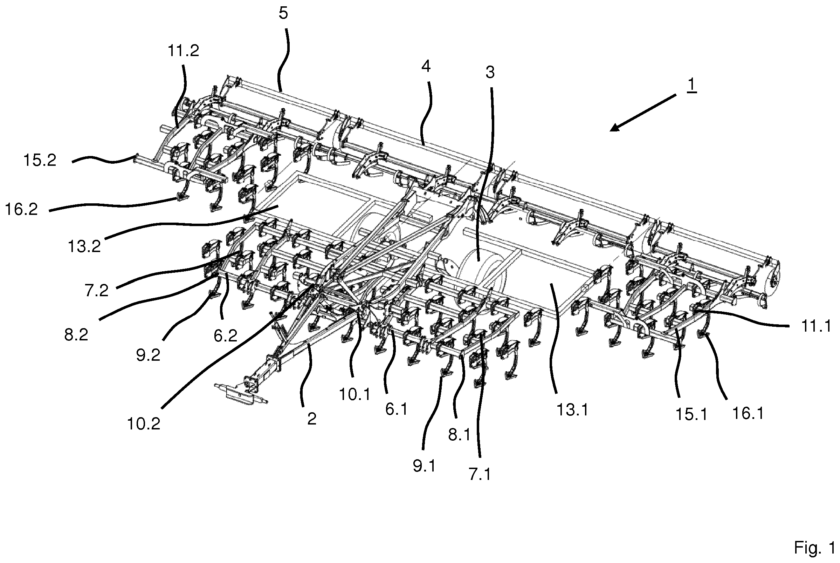

Fig. 1 shows a schematic perspective representation of a soil tillage implement 1 provided with an unfolded configuration. There is a main frame 2 to which wheels 3 are provided. To a rear end 4 of the main frame 2 optional rollers 5 are connected.

On each of opposite sides of the main frame 2 a first working sections 6.1, 6.2 is provided. The first working sections 6.1, 6.2 are covering a first working section area 7.1, 7.2. In Fig. 1 the first working sections 6.1, 6.2 are in a working position oriented horizontally. Each of the first working sections 6.1, 6.2 comprise a first subframe 8.1, 8.2 to which first working tools 9.1, 9.2 are connected for soil preparation. The first working tools 9.1, 9.2 are provided with tines in the example shown in Fig. 1. Alternatively or in addition, other types of soil working tools may be provided such as blades or disc.

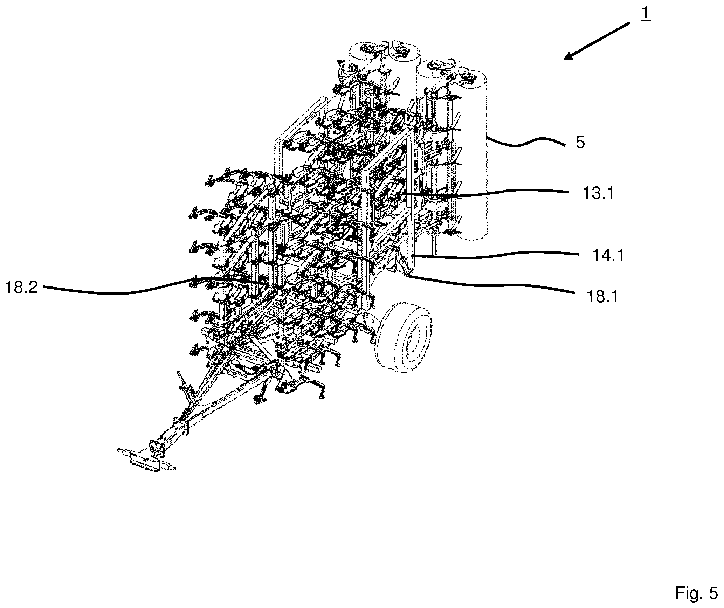

According to Fig. 1 the first working sections 6.1, 6.2 are connected directly to the main frame 2. A first articulation 10.1, 10.2 is provided for relocating, e.g. by rotating or pivoting, the first working sections 6.1, 6.2 around the first articulation 10.1, 10.2, e.g. a first axis of articulation, thereby, allowing first working sections 6.1, 6.2 to be relocated between the working position shown in Fig. 1 and a transport position (see Fig. 5 below) in which the first working sections 6.1, 6.2 on each of the opposite sides of the main frame 2 is in an essentially upright position. The first articulation 10.1, 10.2 may be provided as or with a first pivot axis.

The first working sections 6.1, 6.2 are provided in a front section 12a of the main frame 2. On both of the opposite sides of the main frame 2, second working section 11.1, 11.2 is provided in a rear section 12b of the main frame 2. Between the second working section 11.1, 11.2 and the main frame 2 there is provided a free section 13.1, 13.2 on both of the opposite sides of the main frame 2. The free section 13.1, 13.2 is free of any soil working tools. Together the first and second soil working sections 6.1, 6.2, 11.1, 11.2 provide for a working width of the soil tillage implement 1 in a direction transversely to the longitudinal direction of the main frame 2. Looking into both the longitudinal direction and the transversal direction the first and second working sections 6.1, 6.2, 11.1, 11.2 are in a non-overlapping offset position according to the example in Fig. 1.

The free sections 13.1, 13.2 are provided with a free section subframe 14.1, 14.2. Similarly, the second working section 11.1, 11.2 is provided with a second subframe 15.1, 15.2 carrying second soil working tools 16.1, 16.2.

In the example shown in Fig. 1, the second subframe 15.1, 15.2 is connected to the first subframe 8.1, 8.2 through the free section subframe 14.1, 14.2. The free section subframe 14.1, 14.2 is held or carried essentially by the first subframe 8.1, 8.2. At least the second subframe 15.1, 15.2 does not have a direct connection to the main frame 2 in the example shown.

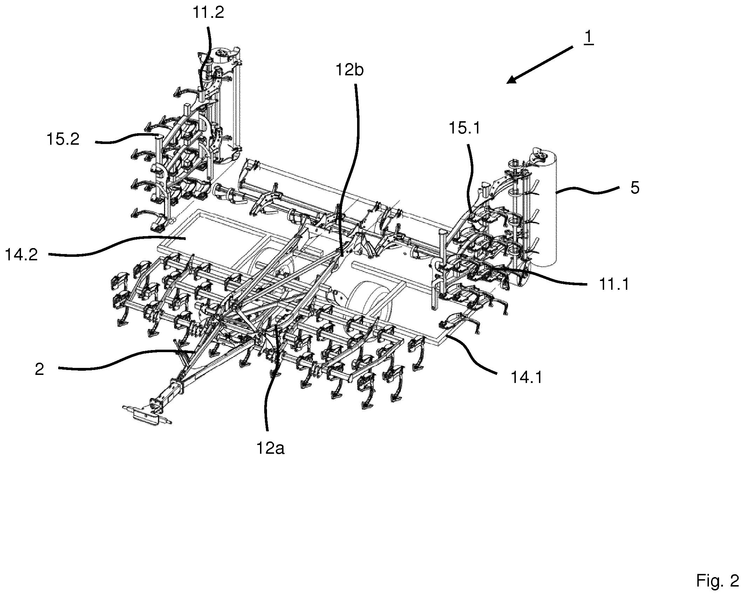

For transportation the soil tillage implement 1 shown in Fig. 1 has to be provided with a limited width which is established by a folding mechanism in the following described with reference to Fig. 2 to 6.

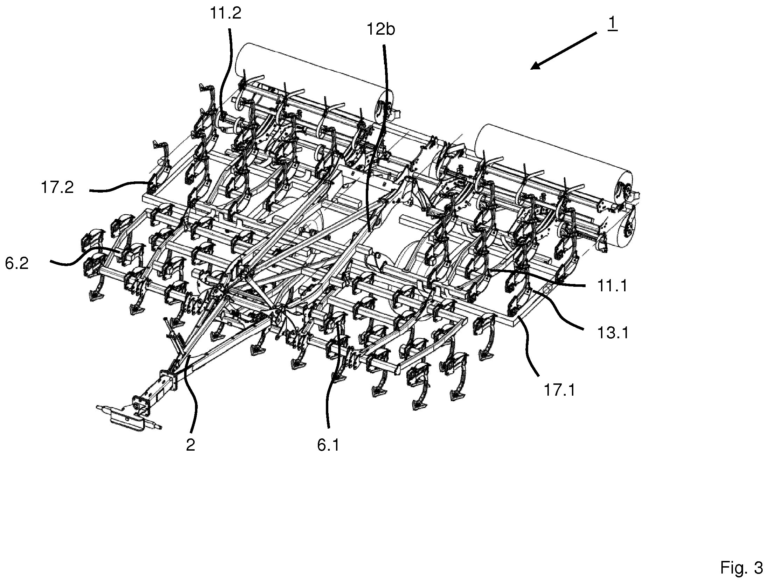

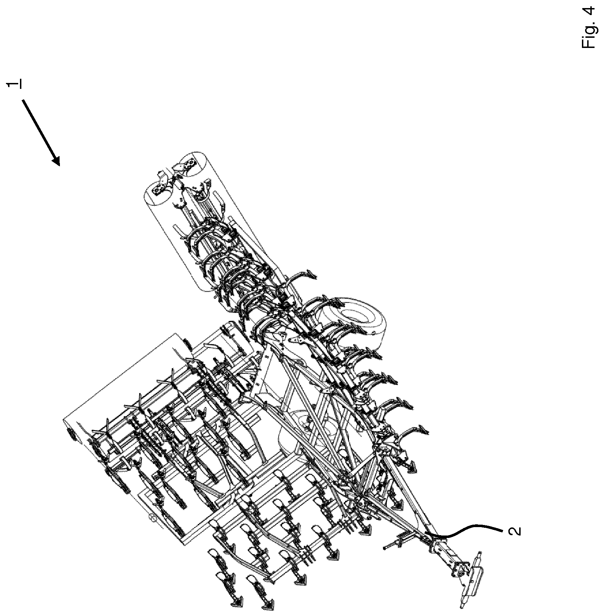

According to Fig. 2 and 3, in the process of folding, the second working section 11.1, 11.2 is rotated around a second articulation 17.1, 17.2 to be placed above the free section 13.1, 13.2 as it is shown in Fig. 3. Following, according to Fig. 4, the first working section 6.1, 6.2 is rotated around the first articulation 10.1, 10.2, thereby, the free section 13.1, 13.2 and the second working section 11.1, 11.2 also being forced to rotate around the first articulation 10.1, 10.2, e.g. the first axis of articulation. Finally, according to Fig. 5, all sections are located in an essentially upright position (transport position). For the first working sections 6.1, 6.2 the first working tools 9.1, 9.2 are oriented in a direction away from the main frame 2. Differently, for the second working section 11.1, 11.2 the second soil working tools 16.1, 16.2 are facing each other, but not crossing or overlapping.

In the process of folding, the free section subframe 14.1, 14.2 is rotated around a third articulation 18.1, 18.2 which, in the example shown, in line with the first axis of articulation or line of articulation of the first articulation 10.1, 10.2.

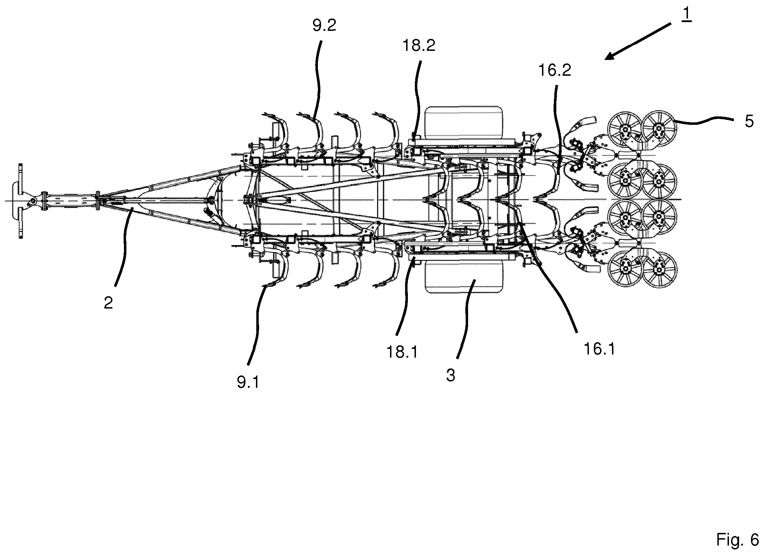

Fig. 6 shows a top view of the soil tillage implement 1 with the transport configuration as shown in Fig. 5.

One or more of the articulations may be provided with an axis of articulation which may be or comprise, for example, a pivot axis.

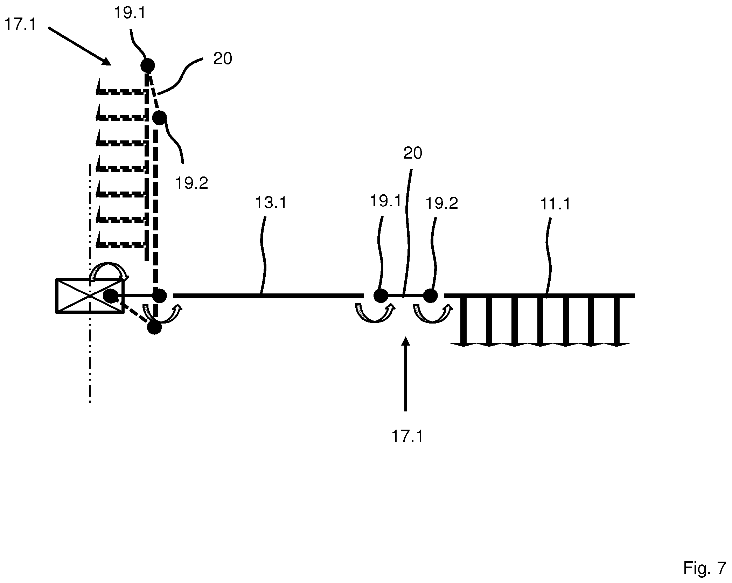

Fig. 7 shows a schematic representation of an arrangement of elements of the soil tillage implement 1 with the unfolded configuration (bold lines) and the completely folded configuration (broken lines) in a front view. The second articulation 17.1 allowing for relocation of the second working section 11.1 is provided with a first and second pivot axis 19.1, 19.2 connected by a connecting rod 20.

The features disclosed in this specification, the figures and / or the claims may be material for the realization of various embodiments, taken in isolation or in various combinations thereof.

## Claims

1. A soil tillage implement (1), comprising
- a main frame (2); and
- on each of opposite sides of the main frame (2),
- a first working section (6.1, 6.2) extending in both a longitudinal direction and a transversal direction of the main frame (2) and having a first subframe (8.1, 8.2) and first soil working tools (9.1, 9.2) received on the first subframe (8.1, 8.2);
- a first articulation (10.1, 10.2) extending essentially parallel to the longitudinal direction and provided proximal with respect to the main frame (2), the first working section (6.1, 6.2) relocatable around the first articulation (10.1, 10.2) between a working position in which the first working section (6.1, 6.2) is oriented essentially horizontally with the first working tools oriented to the soil and a transport position in which the first working section (6.1, 6.2) is provided in an essentially upright position;
- a second working section (11.1, 11.2) extending in both the longitudinal direction and the transversal direction of the main frame (2) and having a second subframe (15.1, 15.2) and second soil working tools (16.1, 16.2) received on the second subframe (15.1, 15.2), the second working section (11.1, 11.2) together with the first working section (6.1, 6.2) providing for a combined working width in the transversal direction;
- a free section (13.1, 13.2) extending in both the longitudinal direction and the transversal direction of the main frame (2) and being free of soil working tools, the free section (13.1, 13.2) located between the main frame (2) and the second working section (11.1, 11.2), thereby, if both the first working section (6.1, 6.2) and the second working section (11.1, 11.2) are in the working position, the first working section (6.1, 6.2) and the second working section (11.1, 11.2) being in a completely non-overlapping offset position along both the longitudinal and the transversal directions;
- a second articulation (17.1, 17.2) extending essentially parallel to the longitudinal direction and provided distal with respect to the main frame (2), the second working section (11.1, 11.2) relocatable around the second articulation (17.1, 17.2) between the working position in which the second working section (11.1, 11.2) is oriented essentially horizontally with the second working tools oriented to the soil and a non-working position in which the second working section (11.1, 11.2) is provided above the free section (13.1, 13.2); and
- a third articulation (18.1, 18.2) is provided, the third articulation (18.1, 18.2) extending essentially parallel to the longitudinal direction and provided proximal with respect to the main frame (2), and the second working section (11.1, 11.2) together with the free section (13.1, 13.2) relocatable around the third articulation (18.1, 18.2) between the non-working position and a transport position in which both the second working section (11.1, 11.2) and the free section (13.1, 13.2) are provided in an essentially upright position;
wherein
- a section area covered by the free section (13.1, 13.2) and oriented essentially horizontally is essentially the same like a section area covered by the second working section (11.1, 11.2);
- the free section (13.1, 13.2) is provided with a free section subframe (14.1, 14.2) which is free of soil working tools and relocatable around at least the third articulation (18.1, 18.2); and
**characterized in that**
- the free section subframe (14.1, 14.2) is connected to the main frame (2) through the first subframe (8.1, 8.2), thereby, the free section (13.1, 13.2) being forced to relocate around at least the first articulation (10.1, 10.2) together with the first working section (6.1, 6.2) if the first working section (6.1, 6.2) is relocating around the first articulation (10.1, 10.2).

2. The soil tillage implement (1) according to claim 1, wherein the second articulation (17.1, 17.2) is provided, with respect to the main frame (2), on a distal side of the free section subframe (14.1, 14.2).

3. The soil tillage implement (1) according to claim 1, wherein the second articulation (17.1, 17.2) is provided, with respect to the main frame (2), on a distal side of the first subframe (8.1, 8.2).

4. The soil tillage implement (1) according to at least one of the preceding claims, wherein the second subframe (15.1, 15.2) is connected to the main frame (2) through the first subframe (8.1, 8.2), thereby, the second working section (11.1, 11.2) being forced to relocate around at least the first articulation (10.1, 10.2) together with the first working section (6.1, 6.2) if the first working section (6.1, 6.2) is relocating around the first articulation (10.1, 10.2).

5. The soil tillage implement (1) according to claim 3, wherein the second subframe (15.1, 15.2) is connected to the first subframe (8.1, 8.2) through the free section subframe (14.1, 14.2).

6. The soil tillage implement (1) according to at least one of the preceding claims, wherein, on each of the opposite sides, the first working section (6.1, 6.2) and the second working section (11.1, 11.2) are provided in a front part (12a) of the main frame (2) and a rear part (12b) of the main frame (2), respectively.

7. The soil tillage implement (1) according to at least one of the preceding claims, wherein at least one of the following is provided:
- the first soil working tools (9.1, 9.2) form the first working sections (6.1, 6.2) on the opposite sides of the main frame (2) are in a non-crossing position if the first working sections (6.1, 6.2) from the opposite sides are located in the transport position; and
- the second soil working tools (16.1, 16.2) form the second working sections (11.1, 11.2) on the opposite sides of the main frame (2) are in a non-crossing position if the second working sections (11.1, 11.2) from the opposite sides are located in the transport position.

8. The soil tillage implement (1) according to at least one of the preceding claims, wherein, in the transport position, the first working section (6.1, 6.2), the second working section (11.1, 11.2), and the free section (13.1, 13.2) are each located in an elevated position essentially above the main frame (2).

9. The soil tillage implement (1) according to at least one of the preceding claims, wherein an axis of articulation of the first articulation (10.1, 10.2) coincidences with an axis of articulation of the third articulation (18.1, 18.2).

10. The soil tillage implement (1) according to at least one of the preceding claims, wherein at least one of the first and second soil working tools (16.1, 16.2) are selected from the following group of tillage tools: tines, discs, coulters, rotors, and blades.

11. A method for folding sections of a soil tillage implement (1), comprising
- providing a soil tillage implement (1) having a main frame (2) and a plurality of section; and
- on each of opposite sides of the main frame (2),
- providing the soil tillage implement (1) with a first working section (6.1, 6.2) extending in both a longitudinal direction and a transversal direction of the main frame (2) and having a first subframe (8.1, 8.2) and first soil working tools (9.1, 9.2) received on the first subframe (8.1, 8.2);
- relocating the first working section (6.1, 6.2) around a first articulation (10.1, 10.2) extending essentially parallel to the longitudinal direction and provided proximal with respect to the main frame (2), thereby, relocating the first working section (6.1, 6.2) between a working position in which the first working section (6.1, 6.2) is oriented essentially horizontally with the first working tools oriented to the soil and a transport position in which the first working section (6.1, 6.2) is provided in an essentially upright position;
- providing the soil tillage implement (1) with a second working section (11.1, 11.2) extending in both the longitudinal direction and the transversal direction of the main frame (2) and having a second subframe (15.1, 15.2) and second soil working tools (16.1, 16.2) received on the second subframe (15.1, 15.2), the second working section (11.1, 11.2) together with the first working section (6.1, 6.2) providing for a combined working width in the transversal direction;
- providing the soil tillage implement (1) with a free section (13.1, 13.2) extending in both the longitudinal direction and the transversal direction of the main frame (2) and being free of soil working tools, the free section (13.1, 13.2) located between the main frame (2) and the second working section (11.1, 11.2), thereby, if both the first working section (6.1, 6.2) and the second working section (11.1, 11.2) are in the working position, the first working section (6.1, 6.2) and the second working section (11.1, 11.2) being in a completely non-overlapping offset position along both the longitudinal and the transversal directions;
- relocating the second working section (11.1, 11.2) around a second articulation (17.1, 17.2) extending essentially parallel to the longitudinal direction and provided distal with respect to the main frame (2), thereby, relocating the second working section (11.1, 11.2) between the working position in which the second working section (11.1, 11.2) is oriented essentially horizontally with the second working tools oriented to the soil and a non-working position in which the second working section (11.1, 11.2) is provided above the free section (13.1, 13.2), wherein a section area covered by the free section (13.1, 13.2) and oriented essentially horizontally is essentially the same like a section area covered by the second working section (11.1, 11.2);
- relocating the second working section (11.1, 11.2) together with the free section (13.1, 13.2) around a third articulation (18.1, 18.2) extending essentially parallel to the longitudinal direction and provided proximal with respect to the main frame (2), thereby, relocating the second working section (11.1, 11.2) together with the free section (13.1, 13.2) between the non-working position and a transport position in which both the second working section (11.1, 11.2) and the free section (13.1, 13.2) are provided in an essentially upright position;
- providing the free section (13.1, 13.2) with a free section subframe (14.1, 14.2) which is free of soil working tools and relocatable around at least the third articulation (18.1, 18.2); and
**characterized by**
- providing the free section subframe (14.1, 14.2) connected to the main frame (2) through the first subframe (8.1, 8.2), thereby, the free section (13.1, 13.2) being forced to relocate around at least the first articulation (10.1, 10.2) together with the first working section (6.1, 6.2) if the first working section (6.1, 6.2) is relocating around the first articulation (10.1, 10.2).

## Patentansprüche

1. Bodenbearbeitungsmaschine (1) umfassend
- einen Hauptrahmen (2); und
- an jeder von entgegengesetzten Seiten des Hauptrahmens (2)
- einen ersten Arbeitsabschnitt (6.1, 6.2), der sich sowohl in einer Längsrichtung als auch in einer Querrichtung des Hauptrahmens (2) erstreckt und einen ersten Teilrahmen (8.1, 8.2) und erste Bodenbearbeitungswerkzeuge (9.1, 9.2) aufweist, die auf den ersten Teilrahmen (8.1, 8.2) aufgenommen sind;
- ein erstes Gelenk (10.1, 10.2), das sich im Wesentlichen parallel zu der Längsrichtung erstreckt und das in Bezug auf den Hauptrahmen (2) proximal bereitgestellt ist, wobei der erste Arbeitsabschnitt (6.1, 6.2) um das erste Gelenk (10.1, 10.2) zwischen einer Arbeitsposition, in der der erste Arbeitsabschnitt (6.1, 6.2) im Wesentlichen horizontal zu den ersten Bearbeitungswerkzeugen ausgerichtet ist, die zu dem Boden ausgerichtet sind, und einer Transportposition umstellbar ist, in der der erste Arbeitsabschnitt (6.1, 6.2) in einer im Wesentlichen aufrechten Position bereitgestellt ist,;
- einen zweiten Arbeitsabschnitt (11.1, 11.2), der sich sowohl in der Längsrichtung als auch in der Querrichtung des Hauptrahmens (2) erstreckt und einen zweiten Teilrahmen (15.1, 15.2) und zweite Bodenbearbeitungwerkzeuge (16.1, 16.2) aufweist, die an dem zweiten Teilrahmen (15.1, 15.2) aufgenommen sind, wobei der zweite Arbeitsabschnitt (11.1, 11.2) zusammen mit dem ersten Arbeitsabschnitt (6.1, 6.2) eine kombinierte Arbeitsbreite in der Querrichtung bereitstellt;
- einen freien Abschnitt (13.1, 13.2), der sich sowohl in der Längsrichtung als auch in der Querrichtung des Hauptrahmens (2) erstreckt und frei von Bodenbearbeitungswerkzeugen ist, wobei sich der freie Abschnitt (13.1, 13.2) zwischen dem Hauptrahmen (2) und dem zweiten Arbeitsabschnitt (11.1, 11.2) befindet, wodurch, wenn sowohl der erste Arbeitsabschnitt (6.1, 6.2) als auch der zweite Arbeitsabschnitt (11.1, 11.2) in der Arbeitsposition sind, sich der erste Arbeitsabschnitt (6.1) und der zweite Arbeitsabschnitt (11.1, 11.2) in einer vollständig nicht überlappenden Versatzposition entlang sowohl der Längs- als auch der Querrichtung befinden;
- ein zweites Gelenk (17.1, 17.2), das sich im Wesentlichen parallel zu der Längsrichtung erstreckt und in Bezug auf den Hauptrahmen (2) distal bereitgestellt ist, wobei der zweite Arbeitsabschnitt (11.1, 11.2) um das zweite Gelenk (17.1, 17.2) zwischen der Arbeitsposition, in der der zweite Arbeitsabschnitt (11.1, 11.2) im Wesentlichen horizontal zu den zweiten Bearbeitungswerkzeugen ausgerichtet ist, die zu dem Boden ausgerichtet sind, und einer Nichtarbeitsposition umstellbar ist, in der der zweite Arbeitsabschnitt (11.1, 11.2) oberhalb des freien Abschnitts (13.1, 13.2) bereitgestellt ist,; und
- ein drittes Gelenk (18.1, 18.2) bereitgestellt ist, wobei sich das dritte Gelenk (18.1, 18.2) im Wesentlichen parallel zu der Längsrichtung erstreckt und in Bezug auf den Hauptrahmen (2) proximal bereitgestellt ist, und der zweite Arbeitsabschnitt (11.1, 11.2) zusammen mit dem freien Abschnitt (13.1, 13.2) um das dritte Gelenk (18.1, 18.2) zwischen der Nichtarbeitsposition und einer Transportposition umstellbar ist, in der sowohl der zweite Arbeitsabschnitt (11.1, 11.2) als auch der freie Abschnitt (13.1, 13.2) in einer im Wesentlichen aufrechten Position bereitgestellt sind;
wobei
- eine Abschnittsfläche, die von dem freien Abschnitt (13.1, 13.2) bedeckt und die im Wesentlichen horizontal ausgerichtet ist, im Wesentlichen gleich ist wie eine Abschnittsfläche, die von dem zweiten Arbeitsabschnitt (11.1, 11.2) bedeckt ist;
- der freie Abschnitt (13.1, 13.2) mit einem Teilrahmen (14.1, 14.2) des freien Abschnitts bereitgestellt ist, der frei von Bodenbearbeitungswerkzeugen ist und um mindestens das dritte Gelenk (18.1, 18.2) umstellbar ist; und
**dadurch gekennzeichnet, dass**
- der Teilrahmen (14.1, 14.2) des freien Abschnitts mit dem Hauptrahmen (2) durch den ersten Teilrahmen (8.1, 8.2) verbunden ist, wodurch der freie Abschnitt (13.1, 13.2) dazu gezwungen ist, sich um mindestens das erste Gelenk (10.1, 10.2) zusammen mit dem ersten Arbeitsabschnitt (6.1, 6.2) umzustellen, wenn sich der erste Arbeitsabschnitt (6.1, 6.2) um das erste Gelenk (10.1, 10.2) umstellt.

2. Bodenbearbeitungsmaschine (1) nach Anspruch 1, wobei das zweite Gelenk (17.1, 17.2) in Bezug auf den Hauptrahmen (2) an einer distalen Seite des Teilrahmens (14.1, 14.2) des freien Abschnitts bereitgestellt ist.

3. Bodenbearbeitungsmaschine (1) nach Anspruch 1, wobei das zweite Gelenk (17.1, 17.2) in Bezug auf den Hauptrahmen (2) an einer distalen Seite des ersten Teilrahmens (8.1, 8.2) bereitgestellt ist.

4. Bodenbearbeitungsmaschine (1) nach mindestens einem der vorstehenden Ansprüche, wobei der zweite Teilrahmen (15.1, 15.2) mit dem Hauptrahmen (2) durch den ersten Teilrahmen (8.1, 8.2) verbunden ist, wodurch der zweite Arbeitsabschnitt (11.1, 11.2) gezwungen ist, sich um mindestens das erste Gelenk (10.1, 10.2) zusammen mit dem ersten Arbeitsabschnitt (6.1, 6.2) umzustellen, wenn sich der erste Arbeitsabschnitt (6.1, 6.2) um das erste Gelenk (10.1, 10.2) umstellt.

5. Bodenbearbeitungsmaschine (1) nach Anspruch 3, wobei der zweite Teilrahmen (15.1, 15.2) mit dem ersten Teilrahmen (8.1, 8.2) durch den Teilrahmen (14.1, 14.2) des freien Abschnitts verbunden ist.

6. Bodenbearbeitungsmaschine (1) nach mindestens einem der vorstehenden Ansprüche, wobei an jeder der entgegengesetzten Seiten der erste Arbeitsabschnitt (6.1, 6.2) und der zweite Arbeitsabschnitt (11.1, 11.2) in einem vorderen Teil (12a) des Hauptrahmens (2) bzw. einem hinteren Teil (12b) des Hauptrahmens (2) bereitgestellt sind.

7. Bodenbearbeitungsmaschine (1) nach mindestens einem der vorstehenden Ansprüche, wobei mindestens eines der Folgenden bereitgestellt ist:
- die ersten Bodenbearbeitungswerkzeuge (9.1, 9.2) bilden die ersten Arbeitsabschnitte (6.1, 6.2) an den entgegengesetzten Seiten des Hauptrahmens (2), befinden sich in einer nicht kreuzenden Position, wenn sich die ersten Arbeitsabschnitte (6.1, 6.2) von den entgegengesetzten Seiten in der Transportposition befinden; und
- die zweiten Bodenbearbeitungswerkzeuge (16.1, 16.2), bilden die zweiten Arbeitsabschnitt (11.1, 11.2) an den entgegengesetzten Seiten des Hauptrahmens (2), befinden sich in einer nicht kreuzenden Position, wenn sich die zweiten Arbeitsabschnitt (11.1, 11.2) von den entgegengesetzten Seiten in der Transportposition befinden.

8. Bodenbearbeitungsmaschine (1) nach mindestens einem der vorstehenden Ansprüche, wobei sich der erste Arbeitsabschnitt (6.1, 6.2), der zweite Arbeitsabschnitt (11.1, 11.2) und der freie Abschnitt (13.1, 13.2) in der Transportposition jeweils in einer erhöhten Position im Wesentlichen oberhalb des Hauptrahmens (2) befinden.

9. Bodenbearbeitungsmaschine (1) nach mindestens einem der vorstehenden Ansprüche, wobei eine Gelenkachse des ersten Gelenks (10.1, 10.2) mit einer Gelenkachse des dritten Gelenks (18.1, 18.2) zusammenfällt.

10. Bodenbearbeitungsmaschine (1) nach mindestens einem der vorstehenden Ansprüche, wobei mindestens eines der ersten und der zweiten Bodenbearbeitungswerkzeuge (16.1, 16.2) aus der folgenden Gruppe von Bodenbearbeitungswerkzeugen ausgewählt ist: Zinken, Scheiben, Schare, Rotoren und Klingen.

11. Verfahren zum Falten von Abschnitten einer Bodenbearbeitungsmaschine (1) umfassend
- Bereitstellen einer Bodenbearbeitungsmaschine (1), die einen Hauptrahmen (2) und eine Vielzahl von Abschnitten aufweist; und
- an jeder von entgegengesetzten Seiten des Hauptrahmens (2)
- Bereitstellen der Bodenbearbeitungsmaschine (1) mit einem ersten Arbeitsabschnitt (6.1, 6.2), der sich sowohl in einer Längsrichtung als auch in einer Querrichtung des Hauptrahmens (2) erstreckt und einen ersten Teilrahmen (8.1, 8.2) und erste Bodenbearbeitungswerkzeuge (9.1, 9.2) aufweist, die an dem ersten Teilrahmen (8.1, 8.2) aufgenommen sind;
- Umstellen des ersten Arbeitsabschnitts (6.1, 6.2) um ein erstes Gelenk (10.1, 10.2), das sich im Wesentlichen parallel zu der Längsrichtung erstreckt und in Bezug auf den Hauptrahmen (2) proximal bereitgestellt ist, wodurch der erste Arbeitsabschnitt (6.1, 6.2) zwischen einer Arbeitsposition, in der der erste Arbeitsabschnitt (6.1, 6.2) im Wesentlichen horizontal zu den ersten Bearrbeitungswerkzeugen ausgerichtet ist, die zu dem Boden ausgerichtet sind, und einer Transportposition umgestellt wird, in der der erste Arbeitsabschnitt (6.1, 6.2) in einer im Wesentlichen aufrechten Position bereitgestellt ist,;
- Bereitstellen der Bearbeitungsmaschine (1) mit einem zweiten Arbeitsabschnitt (11.1, 11.2), der sich sowohl in der Längsrichtung als auch in der Querrichtung des Hauptrahmens (2) erstreckt und einen zweiten Teilrahmen (15.1, 15.2) und zweite Bearbeitungswerkzeuge (16.1, 16.2), die in dem zweiten Teilrahmen (15.1, 15.2) aufgenommen sind, aufweist, wobei der zweite Arbeitsabschnitt (11.1, 11.2) zusammen mit dem ersten Arbeitsabschnitt (6.1, 6.2) eine kombinierte Arbeitsbreite in der Querrichtung bereitstellt;
- Bereitstellen des Bodenbearbeitungswerkzeugs (1) mit einem freien Abschnitt (13.1, 13.2), der sich sowohl in der Längsrichtung als auch in der Querrichtung des Hauptrahmens (2) erstreckt und frei von Bodenbearbeitungswerkzeugen ist, wobei sich der freie Abschnitt (13.1, 13.2) zwischen dem Hauptrahmen (2) und dem zweiten Arbeitsabschnitt (11.1, 11.2) befindet, wodurch, wenn sowohl der erste Arbeitsabschnitt (6.1, 6.2) als auch der zweite Arbeitsabschnitt 11.1, 11.2) in der Arbeitsposition sind, der erste Arbeitsabschnitt (6.1, 6 2) und der zweite Arbeitsabschnitt (11.1, 11.2) in einer vollständig nicht überlappenden Versatzposition entlang sowohl der Längs- als auch der Hauptrichtung sind;
- Umstellen des zweiten Arbeitsabschnitts (11.1, 11.2) um ein zweites Gelenk (17.1, 17.2), das sich im Wesentlichen parallel zu der Längsrichtung erstreckt und in Bezug auf den Hauptrahmen (2) distal bereitgestellt ist, wodurch der zweite Arbeitsabschnitt (11.1, 11.2) zwischen der Arbeitsposition, in der der zweite Arbeitsabschnitt (11.1, 11.2) im Wesentlichen horizontal zu den zweiten Berbeitungswerkzeugen ausgerichtet ist, die zu dem Boden ausgerichtet sind, und einer Nichtarbeitsposition umgestellt wird, in der der zweite Arbeitsabschnitt (11.1, 11.2) oberhalb des freien Abschnitts (13.1, 13.2) bereitgestellt ist, , wobei eine Abschnittsfläche, die durch den freien Abschnitt (13.1, 13.2) abgedeckt ist und im Wesentlichen horizontal ausgerichtet ist, im Wesentlichen gleich ist wie eine Abschnittsfläche, die durch den zweiten Arbeitsabschnitt (11.1, 11.2) bedeckt ist;
- Umstellen des zweiten Arbeitsabschnitt (11.1, 11.2) zusammen mit dem freien Abschnitt (13.1, 13.2) um ein drittes Gelenk (18.1, 18.2), das sich im Wesentlichen parallel zu der Längsrichtung erstreckt und in Bezug auf den Hauptrahmen (2) proximal bereitgestellt ist, wodurch der zweite Arbeitsabschnitt (11.1, 11.2) zusammen mit dem freien Abschnitt (13.1, 13.2) zwischen der Nichtarbeitsposition und einer Transportposition umgestellt wird, in der sowohl der zweite Arbeitsabschnitt (11.1, 11.2) als auch der freie Abschnitt (13.1, 13.2) in einer im Wesentlichen aufrechten Position bereitgestellt sind;
- Bereitstellen des freien Abschnitts (13.1, 13.2) mit einem Teilrahmen (14.1, 14.2) des freien Abschnitts, der frei von Bearbeitungswerkzeugen ist und um mindestens das dritte Gelenk (18.1, 18.2) umstellbar ist; und
**gekennzeichnet durch**
- Bereitstellen des Teilrahmens (14.1, 14.2) des freien Abschnitts, der mit dem Hauptrahmen (2) verbunden ist, durch den ersten Teilrahmen (8.1, 8.2), wodurch der freie Abschnitt (13.1, 13.2) gezwungen wird, sich um mindestens das erste Gelenk (10.1, 10.2) zusammen mit dem ersten Arbeitsabschnitt (6.1, 6.2) umzustellen, wenn sich der erste Arbeitsabschnitt (6.1, 6.2) um das erste Gelenk (10.1, 10.2) umstellt.

## Revendications

1. Instrument de travail du sol (1) comprenant
- un châssis principal (2) ; et
- sur chacun des côtés opposés du châssis principal (2),
- une première section de travail (6.1, 6.2) s'étendant à la fois dans le sens longitudinal et dans le sens transversal du châssis principal (2) et comportant un premier sous-châssis (8.1, 8.2) et des premiers instruments de travail du sol (9.1, 9.2) logés sur le premier sous-châssis (8.1, 8.2) ;
- une première articulation (10.1, 10.2) s'étendant sensiblement parallèlement à la direction longitudinale et prévue proximalement par rapport au châssis principal (2), la première section de travail (6.1, 6.2) pouvant être repositionnée autour de la première articulation (10.1, 10.2) entre une position de travail dans laquelle la première section de travail (6.1, 6.2) est orientée sensiblement horizontalement, les premiers instruments de travail étant orientés vers le sol, et une position de transport dans laquelle la première section de travail (6.1, 6.2) est disposée dans une position sensiblement verticale ;
- une seconde section de travail (11.1, 11.2) s'étendant à la fois dans le sens longitudinal et dans le sens transversal du châssis principal (2) et comportant un deuxième sous-châssis (15.1, 15.2) et des seconds instruments de travail du sol (16.1, 16.2) logés sur le deuxième sous-châssis (15.1, 15.2), la seconde section de travail (11.1, 11.2) créant avec la section de travail (6,1, 6.2) une largeur combinée dans le sens transversal ;
- une section libre (13.1, 13.2) s'étendant à la fois dans la direction longitudinale et dans la direction transversale du châssis principal (11) et exempte d'instruments de travail du sol, la section libre (13.1, 13.2) étant située entre le châssis principal (2) et la seconde section de travail (11.1, 11.2), ce qui a pour effet que, si à la fois la première section de travail (6.1, 6.2) et la seconde section de travail (11.1, 11.2) sont en position de travail, la première section de travail (6.1, 6.2) et la seconde section de travail (11.1, 11.2) se trouvent dans une position décalée intégralement sans chevauchement dans les directions longitudinale et transversale ;
- une deuxième articulation (17.1, 17.2) s'étendant sensiblement parallèlement à la direction longitudinale et prévue de manière à être distale par rapport au châssis principal (2), la seconde section de travail (11.2, 11.2) pouvant être repositionnée autour de la deuxième articulation (17.1, 17.2) entre la position de travail dans laquelle la seconde section de travail (11.1, 11.2) est orientée sensiblement horizontalement avec les seconds instruments de travail orientés vers le sol et une position de repos dans laquelle la seconde section de travail (11.2, 11.2) est disposée au-dessus de la section libre (13.1, 13.2) ; et
- une troisième articulation (18.1, 18.2) étant prévue, la troisième articulation (18.1, 18.2) s'étendant sensiblement parallèlement à la direction longitudinale et étant disposée proximalement par rapport au châssis principal (2), et la seconde section de travail (11.1, 11.2) pouvant être repositionnée avec la section libre (13.1, 13.2) autour de la troisième articulation (18.1, 18.2) entre la position de repos et une position de transport, dans laquelle la seconde section de travail (11.1, 11.2) et la section libre (13.1, 13.2) sont toutes deux disposées dans une position essentiellement verticale ;
- une surface de section couverte par la section libre (13.1, 13.2) et orientée sensiblement horizontalement étant sensiblement la même que la surface de section couverte par la seconde section de travail (11.1, 11.2) ;
- la section libre (13.1, 13.2) étant pourvue d'un sous-châssis de section libre (14.1, 14.2) qui est exempt d'instruments de travail du sol et qui peut être repositionné autour d'au moins la troisième articulation (18.1, 18.2) ; et
**caractérisé en ce que**
- le sous-châssis à section libre (14.1, 14.2) est relié au châssis principal (2) par l'intermédiaire du premier sous-châssis (8.1 , 8.2), de sorte que la section libre (13.1, 13.2) est forcée de se repositionner autour d'au moins la première articulation (10.1, 10.2) conjointement avec la première section de travail (6.1, 6.2) si la première section de travail (6.1, 6.2) se repositionne autour de la première articulation (10.1, 10.2).

2. Instrument de travail du sol (1) selon la revendication 1, dans lequel la deuxième articulation (17.1, 17.2) est prévue, par rapport au châssis principal (2), sur un côté distal du sous-châssis à section libre (14.1, 14.2).

3. Instrument de travail du sol (1) selon la revendication 1, dans lequel la deuxième articulation (17.1, 17.2) est prévue, par rapport au châssis principal (2), sur un côté distal du premier sous-châssis (8.1, 8.2).

4. Instrument de travail du sol (1) selon au moins l'une des revendications précédentes, dans laquelle le second sous-châssis (15.1, 15.2) est relié au châssis principal (2) par l'intermédiaire du premier sous-châssis (8.1, 8.2), de sorte que la seconde section de travail (11.1, 11.2) est forcée de se repositionner autour d'au moins la première articulation (10.1, 10.2) conjointement avec la première section de travail (6.1, 6.2) si la première section de travail (6.1, 6.2) se repositionne autour de la première articulation (10.1, 10.2).

5. Instrument de travail du sol (1) selon la revendication 3, dans lequel le second sous-châssis (15.1, 15.2) est relié au premier sous-châssis (8.1, 8.2) par l'intermédiaire du sous-châssis de section libre (14.1, 14.2).

6. Instrument de travail du sol (1) selon au moins l'une des revendications précédentes, dans laquelle, sur chacun des côtés opposés, la première section de travail (6.1, 6.2) et la seconde section de travail (11.1, 11.2) sont prévues respectivement dans une partie avant (12a) du châssis principal (2) et une partie arrière (12b) du châssis principal (2).

7. Instrument de travail du sol (1) selon au moins l'une des revendications précédentes, dans lequel au moins l'un des cas suivants est prévu :
- les premiers instruments de travail du sol (9.1, 9.2) formant les premières sections de travail (6.1, 6.2) sur les côtés opposés du châssis principal (2) sont dans une position non croisée si les premières sections de travail (6.1, 6.2) des côtés opposés sont situées dans la position de transport ; et
- les seconds instruments de travail du sol (16.1, 16.2) forment les secondes sections de travail (11.1, 11.2) sur les côtés opposés du châssis principal (2) sont dans une position non croisée si les secondes sections de travail (11.1, 11.2) des côtés opposés sont situées dans la position de transport.

8. Instrument de travail du sol (1) selon au moins l'une des revendications précédentes, dans laquelle, dans la position de transport, la première section de travail (6.1, 6.2), la seconde section de travail (11.2, 11.2) et la section libre (13.1, 13.2) sont situées chacune dans une position élevée essentiellement au-dessus du châssis principal (2).

9. Instrument de travail du sol (1) selon au moins l'une des revendications précédentes, dans lequel un axe d'articulation de la première articulation (10.1, 10.2) coïncide avec un axe d'articulation de la troisième articulation (18.1, 18.2).

10. Instrument de travail du sol (1) selon au moins l'une des revendications précédentes, dans lequel au moins l'un des premier et second instruments de travail du sol (16.1, 16.2) est sélectionné dans le groupe suivant d'instruments de travail du sol : dents, disques, coutres, rotors et lames.

11. Procédé pour plier des sections d'un instrument de travail du sol (1), comprenant les étapes consistant à
- prévoir un instrument de travail du sol (1) ayant un châssis principal (2) et une pluralité de sections ; et
- sur chacun des côtés opposés du châssis principal (2),
- prévoir l'instrument de travail du sol (1) d'une première section de travail (6.1, 6.2) s'étendant à la fois dans le sens longitudinal et dans le sens transversal du châssis principal (2) et présentant un premier sous-châssis (8.1, 8.2) et des premiers instruments de travail du sol (9.1, 9.2) logé sur le premier sous-châssis (8.1, 8.2) ;
- repositionner la première section de travail (6.1, 6.2) autour d'une première articulation (10.1, 10.2) sensiblement parallèle à la direction longitudinale et disposée proximalement par rapport au châssis principal (2), en repositionnant ainsi la première section de travail (6.1, 6.2) entre une position de travail dans laquelle la première section de travail (6.1, 6.2) est orientée sensiblement horizontalement, les premiers instruments de travail étant orientés vers le sol, et une position de transport dans laquelle la première section de travail (6.1, 6.2) est disposée dans une position sensiblement verticale ;
- munir l'instrument de travail du sol (1) d'une seconde section de travail (11.1, 11.2) s'étendant à la fois dans le sens longitudinal et dans le sens transversal du châssis principal (25) et comportant un deuxième sous-châssis (15.1, 15.2) et des seconds instruments de travail du sol (16.1, 16.2) logés sur le deuxième sous-châssis (15.1, 15.2), la seconde section de travail (11.1, 11.2) créant avec la première section de travail (6.1, 6.2) une largeur de travail combinée dans le sens transversal ;
- pourvoir l'instrument de travail du sol (1) d'une section libre (13.1, 13.2) s'étendant à la fois dans la direction longitudinale et dans la direction transversale du châssis principal (2) et exempte d'instruments de travail du sol, la section libre (13.1, 13.2) étant située entre le châssis principal (2) et la seconde section de travail (11.1, 11.2), si la première section de travail (6,1, 6.2) et la seconde section de travail (11.1, 11.2) sont en position de travail, la première section de travail (6,1, 6.2) et la seconde section de travail (11.1, 11.2) se trouvant ainsi dans une position décalée intégralement sans chevauchement dans les directions longitudinale et transversale ;
- repositionner la seconde section de travail (11.1, 11.2) autour d'une deuxième articulation (17.1, 17.2) s'étendant sensiblement parallèlement à la direction longitudinale et disposée de manière distale par rapport au cadre principal (2), en repositionnant la seconde section de travail (11.1, 11.2) entre la position de travail dans laquelle la seconde section de travail (11.1, 11.2) est orientée sensiblement horizontalement avec les seconds instruments de travail orientés vers le sol et une position de repos dans laquelle la seconde section de travail (11.1, 11.2) est prévue au-dessus de la section libre (13.1, 13.2), une surface de section recouverte par la section libre (13.1, 13.2) et orientée sensiblement horizontalement étant sensiblement identique à une surface de section recouverte par la seconde section de travail (11.1, 11.2) ;
- repositionner la seconde section de travail (11.2, 11.2) avec la section libre (13.2, 13.2) autour d'une troisième articulation (18.1, 18.2) s'étendant sensiblement parallèlement à la direction longitudinale et disposée de manière proximale par rapport au châssis principal (2), en repositionnant ainsi la seconde section de travail (11.1, 11.2) avec la section libre (13.1, 13.2) entre la position de repos et une position de transport dans laquelle la seconde section de travail (11.1, 11.2) et la section libre (13.1, 13.2) sont toutes deux disposées dans une position essentiellement verticale ;
- munir la section libre (13.1, 13.2) d'un sous-châssis de section libre (14.1, 14.2) qui est exempt d'instruments de travail du sol et qui peut être repositionné autour d'au moins la troisième articulation (18.1, 18.2) ; et
**caractérisé par**
- la prévision du sous-châssis à section libre (14.1, 14.2) relié au châssis principal (2) par l'intermédiaire du premier sous-châssis (8.1, 8.2), la section libre (13.1, 13.2) étant forcée de se repositionner autour d'au moins la première articulation (10.1, 10.2) conjointement avec la première section de travail (6.1, 6.2) si la première section de travail (6.1, 6.2) se repositionne autour de la première articulation (10.1, 10.2).
